# EUROPEAN PATENT APPLICATION

(11) **EP 3 742 447 A1**
(43) Date of publication of application: **25.11.2020**
(21) Application number: 20171166.0
(22) Date of filing: 23.04.2020
(51) Int. Cl.: G11C 5/04, G06F 21/79, G11C 7/24, G11C 16/22, G11C 29/52, H01L 23/00, G01R 31/317, G06K 19/073, H01L 21/66

(54) **SEMICONDUCTOR DEVICES WITH SECURITY FEATURES**

(30) Priority: 30.04.2019 US 201916398451
(71) Applicant: NXP B.V., 5656 AG Eindhoven (NL)
(72) Inventor: DELSHADPOUR, Siamak, Redhill, Surrey RH1 1QZ (GB); DANIEL, Steven, Redhill, Surrey RH1 1QZ (GB); HANSON, Harold Garth, Redhill, Surrey RH1 1QZ (GB)
(74) Representative: Hardingham, Christopher Mark

(57) **Abstract**

A semiconductor die includes a circuit, a plurality of metal layers, a first sawbow line coupled to the circuit, and a second sawbow line coupled to the circuit. The first sawbow line is hidden under a first metal layer of the plurality of metal layers when the first sawbow line is in a cut state. The second sawbow line is hidden under the first metal layer or a second metal layer of the plurality of metal layers when the second sawbow line is in a cut state. The first sawbow line and the second sawbow line are on different ones of the plurality of metal layers. A number of pull-down or pull-up resistors may be included to set the logical states of the sawbow lines, in order to disable a predetermined mode of operation of the die when a wafer including the die is cut. The sawbow lines may carry a variety of types of signals (e.g., analog, digital, random, ground, supply) that makes the nature and value of them extremely hard to detect/hack.

## Description

### TECHNICAL FIELD

Example embodiments disclosed herein relate generally to semiconductor devices.

### BACKGROUND

Semiconductor chips are used in most electronic devices today. The chips may perform a variety of signal processing and data storage functions. Examples of chips which perform data storage functions include one-time programmable (OTP) and multi-time programmable non-volatile memory.

A number of processes are performed to ensure the quality of the chips before they are sold to customers. Some processes involve programming and testing to ensure proper operation. Programming is usually performed while the die of the chip is still part of the wafer. Testing may also be performed while the die is in this state and, for example, may include scan tests and various types of functional tests. Once the dies are programmed and tested, the wafer may be cut to form the finished products.

A chip with memory may include various pins, conductive lines, or other features that are used for testing and programming during manufacture. These features may be exploited by hackers seeking unauthorized access to data stored in the chip. One hacking technique involves locating sawbow lines created when a wafer is cut. Once the sawbow lines are located on a cut die, one or more of the aforementioned features of the die may be located and used to access the stored data.

Attempts have been made to prevent memory chips and other types of semiconductor devices from being hacked. However, these attempts have proven inadequate.

### SUMMARY

A brief summary of various example embodiments is presented below. Some simplifications and omissions may be made in the following summary, which is intended to highlight and introduce some aspects of the various example embodiments, but not to limit the scope of the invention. Detailed descriptions of example embodiments adequate to allow those of ordinary skill in the art to make and use the inventive concepts will follow in later sections.

In accordance with one or more embodiments, a chip includes a circuit, a plurality of metal layers, and a portion of a sawbow line coupled to the circuit, wherein the portion of the sawbow line corresponds to the sawbow line in a cut state, the portion of the sawbow line on a first metal layer of the plurality of metal layers, and wherein the first metal layer is at least partially aligned with and overlapped by a second metal layer of the plurality of metal layers, the second metal layer at least partially hiding the portion of the sawbow line.

The chip may include a resistor coupled to the sawbow line, wherein the resistor is to set a voltage of the sawbow line to a predetermined logical value when the sawbow line is in the cut state. The chip may include logic coupled to the resistor, wherein the logic is to output a signal to disable a mode of operation of the circuit when the sawbow line is set to the predetermined logical value by the resistor. The mode of operation is a test mode and/or memory/factory program mode of the circuit. The sawbow line may carry at least one of a power supply signal, an analog test signal, or a digital test signal to or from the circuit.

In accordance with one or more embodiments, a chip includes a circuit, a plurality of metal layers, a portion of a first sawbow line coupled to the circuit, and a portion of a second sawbow line coupled to the circuit, wherein the portion of the first sawbow line corresponds to the first sawbow line in a cut state and the portion of the second sawbow line corresponds to the second sawbow line in a cut state, the portion of the first sawbow line hidden under a first metal layer of the plurality of metal layers and the portion of the second sawbow line hidden under the first metal layer or a second metal layer of the plurality of metal layers, the first sawbow line and the second sawbow line on different ones of the plurality of metal layers.

The portion of the first sawbow line may be on the second metal layer, the portion of the second sawbow line may be on a third metal layer, and the first metal layer may hide the portions of the first and second sawbow lines. The third metal layer may be aligned with and under the second metal layer and the second metal layer may hide the portion of the second sawbow line. The first resistor may be coupled to the portion of the first sawbow line and a second resistor may be coupled to the portion of the second sawbow line, wherein the first resistor is to set a voltage of the portion of the first sawbow line to a first predetermined value and the second resistor is to set a voltage of the portion of the second sawbow line to a second predetermined value. The first predetermined value may be different from the second predetermined value. The first predetermined value may be a first logical value and the second predetermined value may be a second logical value different from the first logical value.

The chip may include first logic coupled to the first resistor and second logic coupled to the second resistor, wherein at least one of the first logic and the second logic is configured to output a signal to disable a mode of operation of the circuit when the portion of the first sawbow line is set to the first predetermined value by the first resistor or when the portion of the second sawbow line is set to the second predetermined value by the second resistor. The mode of operation may be a test mode and/or memory/factory program mode of the circuit.

In accordance with one or more embodiments, a chip includes a plurality of metal layers, a portion of a first sawbow line, and a portion of a second sawbow line, wherein the portion of the first sawbow line corresponds to the first sawbow line in a cut state and the portion of the second sawbow line corresponds to the second sawbow line in a cut state, the portion of the first sawbow line hidden under a first metal layer of the plurality of metal layers and the portion of the second sawbow line hidden under the first metal layer or a second metal layer of the plurality of metal layers, the first sawbow line and the second sawbow line on different ones of the plurality of metal layers. The portion of the first sawbow line may be on different ones of the plurality of metal layers. The portion of the first sawbow line may extend in a first direction, the portion of the second sawbow line may extend in a second direction, and the first direction may cross the second direction. The first direction may be diagonal to the second direction.

The chip may include a first resistor coupled to the portion of the first sawbow line and a second resistor coupled to the portion of the second sawbow line, wherein the first resistor may be configured to set a voltage of the portion of the first sawbow line to a first predetermined value and the second resistor is configured to set a voltage of the portion of the second sawbow line to a second predetermined value when cut. The first predetermined value may be a first logical value and the second predetermined value may be a second logical value different from the first logical value.

### BRIEF DESCRIPTION OF THE DRAWINGS

Additional objects and features of the invention will be more readily apparent from the following detailed description and appended claims when taken in conjunction with the drawings. Although several example embodiments are illustrated and described, like reference numerals identify like parts in each of the figures, in which:
FIG. 1 illustrates an embodiment of sawbow lines connecting two dies;
FIG. 2A illustrates another embodiment of sawbow lines connecting two dies;
FIG. 2B illustrates an embodiment of logic that generates a sawbow control signal;
FIG. 3 illustrates an embodiment of metal layers for the sawbow lines;
FIG. 4 illustrates an embodiment of the metal layers including a seal ring;
FIG. 5 illustrates another embodiment including sawbow lines and test logic;
FIG. 6 illustrates another embodiment including sawbow lines and test logic;
FIG. 7 illustrates another embodiment including sawbow lines and test logic;
FIG. 8 illustrates another embodiment including sawbow lines and test logic;
FIG. 9 illustrates another embodiment including sawbow lines and test logic;
FIG. 10 illustrates a pattern of sawbow line connections between dies; and
FIG. 11 illustrates an example of sawbow cut lines.

### DETAILED DESCRIPTION

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various example embodiments described herein are not necessarily mutually exclusive, as some example embodiments can be combined with one or more other example embodiments to form new example embodiments. Descriptors such as "first," "second," "third," etc., are not meant to limit the order of elements discussed, are used to distinguish one element from the next, and are generally interchangeable. Values such as maximum or minimum may be predetermined and set to different values based on the application.

Example embodiments describe a method for concealing features that may be used, for example, to program and/or test a semiconductor device during manufacture. The features are on or coupled to a die to be cut from a wafer and may be detected after the wafer is cut, if not for the embodiments described herein. In one embodiment, the features may include sawbow lines. Because many hacking techniques involve locating sawbow lines as an initial step, concealing the sawbow lines (or otherwise making them very hard to find) will serve as a strong deterrent to hacking.

In one embodiment, the sawbow lines on the die are arranged to be hidden by one or more overlapping metal layers. In this or another embodiment, sawbow lines may formed on one or more different metal layers to prevent detection. In these or other embodiments, the sawbow lines may be arranged in a random manner or a predetermined pattern to provide concealment. In these or other embodiments, the die circuits used to perform a test mode and/or memory/factory program mode during manufacture may be disabled as an additional security measure against hackers. By incorporating one or more of the security features into a semiconductor die, hackers will not be able to locate the sawbow lines and thus will be unable to gain access to the circuits of the die.

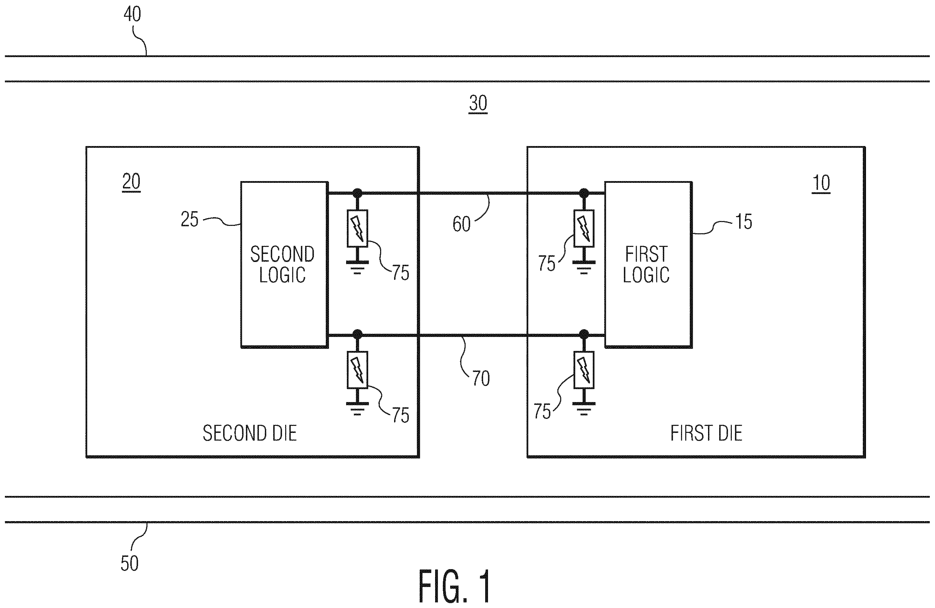

FIG. 1 illustrates an embodiment which includes a first semiconductor die 10 adjacent to a second semiconductor die 20 on an uncut wafer 30. The semiconductor dies are between two dicing lanes 40 and 50 used as guides for cutting the wafer and separating the dies 10 and 20. Additional dicing lanes may extend in a vertical direction adjacent to and between the dies. The dicing lanes may be, for example, trenches or score lines formed by chemical etching. The cutting may be performed, for example, by a mechanical or laser dicing saw. The dies may be used to form semiconductor memories, signal processor, or other types of integrated circuits.

In one case, more than two dies may be located between adjacent dicing lanes (e.g., in a same row) may be electrically connected to one another by one or more signal lines. The signal lines may include ones used to test the dies while during a test mode prior to the wafer being cut during manufacture, e.g., factory mode testing. When the dies include semiconductor memory, the signal lines may also include ones used to program the memory prior to cutting. The signal lines may be different from ones used to test or program the dies in another embodiments. Because the signals lines will be severed during the wafer cutting process, they may be referred to as sawbow lines. In one embodiment, the sawbow lines may be used in place of pins for the die, because connector pins may be much easier to locate for hacking purposes than severed sawbow lines (which, as described below, may be hidden by other lines and thus made to be virtually undetectable).

An example embodiment includes two sawbow lines (a first sawbow line 60 and a second sawbow line 70) that connecting dies 10 and 20. While in this case the sawbow lines only connect two dies 10 and 20, in another embodiment the sawbow lines may commonly connect more than two dies (e.g., in a same row or column) of the uncut wafer. Also, while the sawbow lines in this embodiment are used to test and/or program circuits on the dies, the sawbow lines may be used for a different purpose in another embodiment. The sawbow lines may be implemented, for example, using CMOS 0.14 µm technology.

Referring to FIG. 1, the dies 10 and 20 are equipped with first logic 15 and second logic 25, respectively. First logic 15 may transmit signals through corresponding ones of the sawbow lines 60 and 70, and second logic 25 may receive the processed/changed signals for logic circuits in one or both dies. In one embodiment, the reverse may occur, second logic 25 may transmit signals through corresponding ones of the sawbow lines 60 and 70 and first logic 15 may receive the signals for logic circuits in one or both dies. The logic circuits may include hardware, software, or both. The results of the logic may be output to a memory and/or a circuit, for example, through the sawbow lines and/or one or more other signal lines of the dies.

In one embodiment, the sawbow lines 60 and 70 may be equipped with electrostatic discharge (ESD) protection 75. The ESD protection may include, for example, at least one metal layer or conductive connection between each of the sawbow lines 60 and 70 and a reference potential 90 (e.g., ground) on each die. The wafer may also include a seal ring surrounding an area including or adjacent to the first and second semiconductor dies 10 and 20. In this case, the ESD protection 75 may allow at least one (and in some cases only one) metal layer of a plurality of metal layers, and one or more vias connecting the metal layers, to be removed from the seal ring, due to less ESD influence.

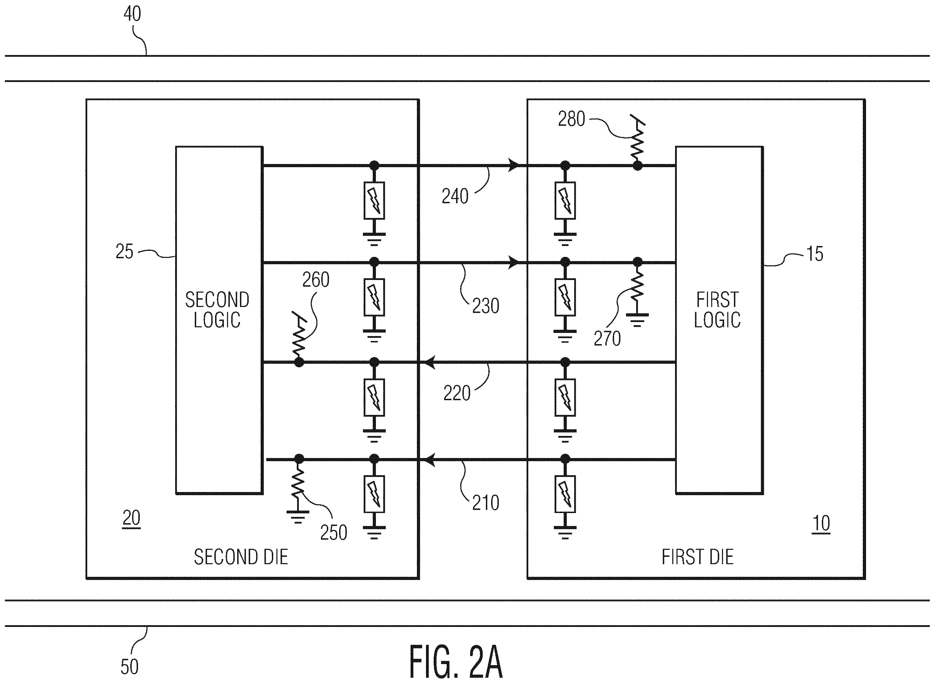

FIG. 2A illustrates an embodiment including four sawbow lines 210, 220, 230, and 240 between the first and second logic 15 and 25 of dies 10 and 20. In this embodiment, two of the sawbow lines 210 and 220 carry test signals from the first logic 15 to the second logic 25. The other two sawbow lines 230 and 240 carry test signals from the second logic to the first logic. In this embodiment, the sawbow lines may be respectively coupled to resistors 250, 260, 270, and 280. Depending on the design strategy to be implemented for hacking prevention, the resistors may be pull-up resistors, pull-down resistors, or a combination of the two. In FIG. 2A, resistors 250 and 270 pull down the logical voltage values on sawbow lines 210 and 220 to logical zero, and resistors 260 and 280 pull up the logical voltage values on sawbow lines 230 and 240 to logical 1. In one implementation, all or a portion of the resistors may be used to generate a sawbow_ok signal equal to a logical 0 in a sawbow cut mode, which may serve to disable activation of a test or program mode in the circuits of the dies.

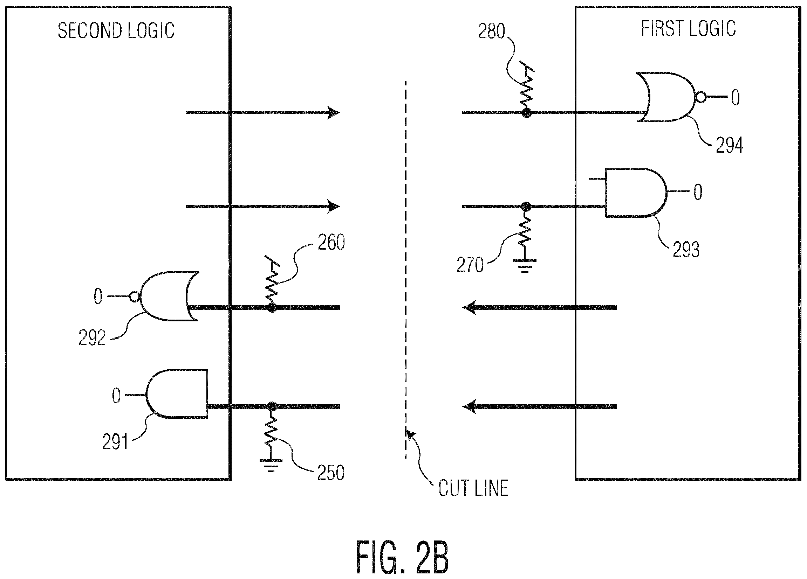

FIG. 2B illustrates an example of how resistors 260 and 280 may operate as a weak pull-up and how resistors 250 and 270 may operate as a weak pull-down. In FIG. 2B, the second logic 25 includes an AND gate 291 and a NOR gate 292. The AND gate 291 is coupled between sawbow line 210 and a supporting circuit in the second logic, and the NOR gate 292 is coupled between the sawbow line 220 and a supporting circuit in the second logic. The first logic 15 includes an AND gate 293 and NOR gate 294. The AND gate 293 is coupled between sawbow line 230 and a supporting circuit in the first logic, and the NOR gate 294 is coupled between the sawbow line 240 and a supporting circuit in the first logic. Before the sawbow lines are cut, inputs of logic 293 and 291 logic may be forced to logic 1 through corresponding sawbow lines. Also, inputs of logic 294 and 292 may be forced to logic 0 through corresponding sawbow lines, thereby preventing hacking.

In FIG. 2A, when the sawbow lines are cut during sawbow cut mode, the sawbow lines 210 and 230 will be pulled down to logic 0 by resistors 250 and 270. This causes a logical 0 to be input into AND gates 291 and 293, which, in turn, causes these AND gates to output logical zeros to the test circuits of the first and second logic that were connected to the now-cut sawbow lines 210 and 230. The circuits of the first and second logic connected to sawbow lines 210 and 230 are designed to be disabled when logical zeros are received from the outputs of the AND gates, e.g., when a sawbow_ok signal is received, for example, by a controller on the die (or other circuit) that controls the test mode of operation of the die. Disabling may include permanently disabling the ability of the dies to enter into test mode and/or memory/factory program mode.

Also, when the sawbow lines are cut, the sawbow lines 220 and 240 will be pulled up to logical 1 by resistors 260 and 280. This causes a logical 1 to be input into NOR gates 292 and 294, which, in turn, causes these NOR gates to output logical zeros to the circuits of the first and second logic that were connected to the now-cut sawbow lines 220 and 240. The circuits of the first and second logic connected to sawbow lines 220 and 240 are designed to be disabled when logical zeros are received from the outputs of the NOR gates. Disabling may include permanently disabling the ability of the dies to enter into test mode and/or memory/factory program mode. Each of the sawbow lines in FIG. 2A may include ESD protection. As with the embodiment of FIG. 1, the sawbow lines may also, or in the alternative, carry programming signals.

In one embodiment, cutting of the sawbow lines may cause the resistors 250, 260, 270, and 280 to be connected. This may be accomplished, for example, using a fuse or switch coupled to each sawbow line, e.g., as long as the fuse is intact the resistor is shorted out and thus has no effect. When the fuse is broken (e.g., by cutting or application of an over-current), the short no longer exists and the resistors pull up or pull down the logical states of the sawbow lines, permanently disabling the test mode and/or memory/factory program mode of operation.

Each of the first and second dies may include one metal layer or a plurality of metal layers. In order to provide an additional measure of protection against hacking, the sawbow lines may be distributed among different layers relative to one another. This may make finding the layers more difficult to locate by a hacker. As noted above, even if a hacker is able to find the cut sawbow lines, the resistors discussed in accordance with the aforementioned embodiments will disable the circuits on the dies used to implement a test mode and/or memory/factory program mode, which makes unauthorized access to stored data not possible.

In some cases, the stored data may include one or more encryption keys. A hacker may attempt to locate the sawbow lines to access these keys, in order to access data on the dies. However, the security feature(s) built into the dies as described herein will prevent access to the keys. In the event that the sawbow lines are discovered and the keys are somehow accessed, the pull-down/pull-up resistors will disable the test and program mode circuits of the dies.

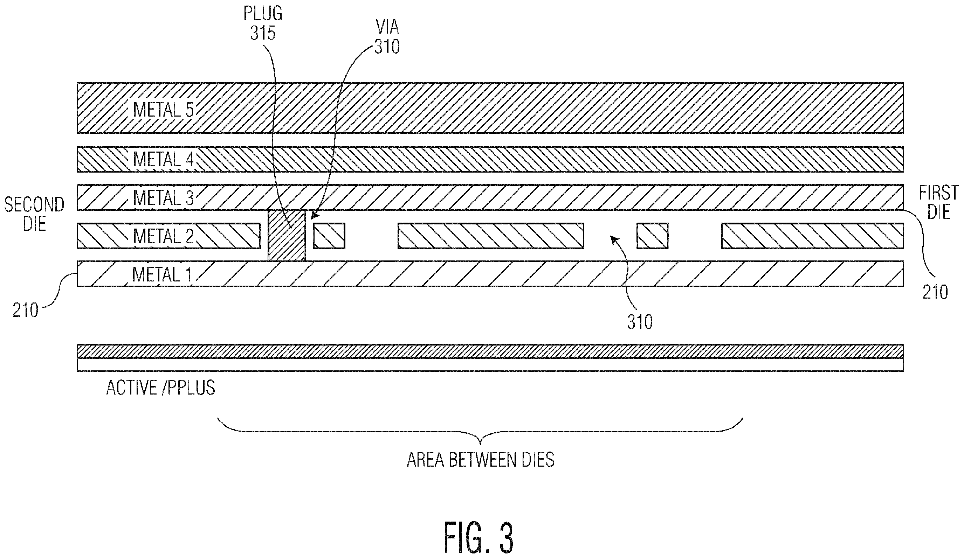

FIG. 3 illustrates a cross-sectional view of a plurality of metal layers that may be included in each of the dies 10 and 20 prior to cutting in accordance with one embodiment. In one embodiment, the metal layers may extend across an area between the dies in order to allow operations in the test mode and/or memory/factory program mode to be performed. In this example, five metal layers are included: Metal 1, Metal 2, Metal 3, Metal 4, and Metal 5. Certain metal layers may be connected to one or more plugs 315 extending in corresponding vias 310.

The sawbow lines may be arranged in a random order or predetermined pattern in different ones of the metal layers that are vertically stacked. For example, all of the sawbow lines may be on different metal layers. As a result, one or more metal layers that do not include a sawbow line may hide a sawbow line on an underlying metal layer. In another embodiment, two or more of the sawbow lines may be on a same layer, but other overlying metal layers may still hide them. In one embodiment, the sawbow line in one of the first die 10 and the second die 20 may be on a first one of the metal layers and the same sawbow line may be on a second one of the metal layers in the other of the first die 10 and the second die 20. This may be accomplished, for example, by connecting the first metal layer to the second metal layer using different metals connected by vias in the five-metal layer structure, e.g., a via between M1 and M2, a via between M3 and M2, etc. Such an arrangement is illustrated in FIG. 3, where sawbow line 210 in the first die 10 is at metal layer Metal 3 and the same sawbow line 210 in the second die 20 is at metal layer Metal 1. Dispersing at least some of the sawbow lines in this manner may make detection of the sawbow lines more difficult after they are cut, thereby adding an additional security measure against hacking.

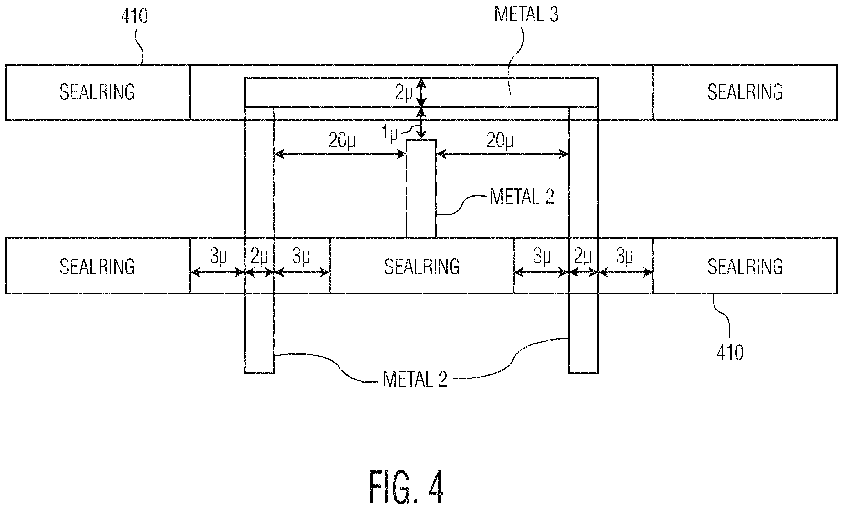

FIG. 4 illustrates a top view of how one or more sealring portions 410 may be positioned relative to the metal layers according to one embodiment. In this embodiment, the second metal layer Metal 2 extends in a vertical direction perpendicular to the sealring portions and the third metal layer Metal 3 extends in a horizontal direction relative to the sealring portions. Examples of tolerances are also provided (in units of microns) concerning spacing that may exist between the metal layers Metal 2 and Metal 3 relative to the sealring portions. As illustrated in FIG. 4, arranging all or a portion of the sawbow lines in an at least partially overlapping relationship allows some metal layers to hide other sawbow lines when cut, thereby making detection of the cut sawbow lines for purposes of hacking information stored in the die very difficult, if not impossible.

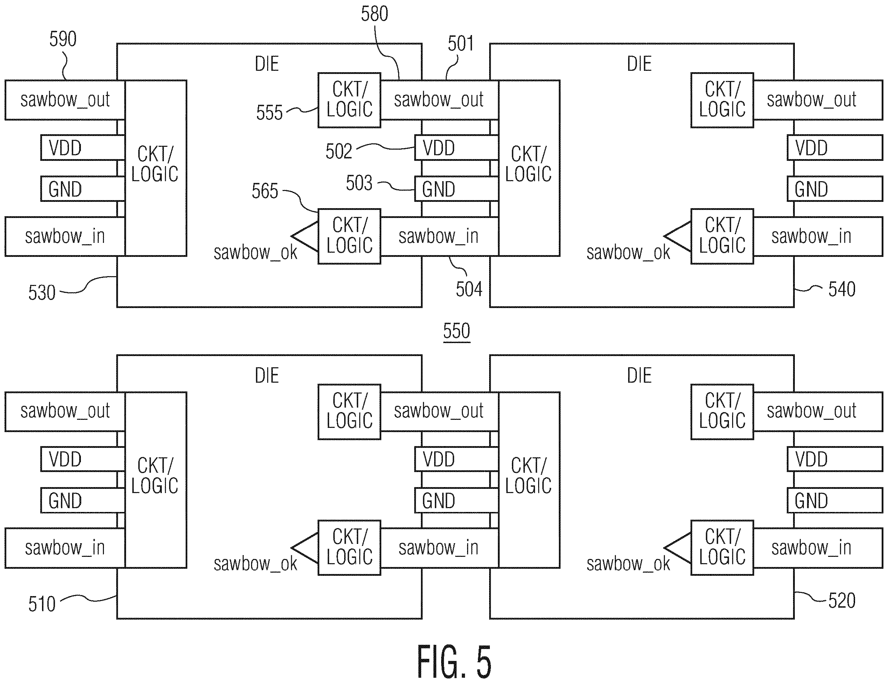

FIG. 5 illustrates an arrangement of four dies 510, 520, 530, and 540 on an uncut wafer 550. In this embodiment, a first group 580 of four sawbow lines connects a first side of each die to an adjacent die. A second group 590 of four sawbow lines connects a second side of each die to another adjacent die. The first and second groups of sawbow lines may be the same types of lines. For example, in each group a first sawbow line may be a sawbow_out line 501, the second sawbow line may be a power supply line 502, a third sawbow line 503 may be a ground line (or other reference potential), and a fourth sawbow line 504 may be a sawbow_in line.

Each die may also include a first logic circuit 555 and a second logic circuit 565. The first logic circuit 555 outputs signals (e.g., signals which are part of a coding scheme for test mode and/or memory/factory program signals) to the sawbow_out line connected to an adjacent die (e.g., on the right side). The second logic circuit 565 receives signals (e.g., processed in or passed through) from the adjacent die on the right side. The power supply line may power the logic circuits to perform the test mode and/or memory/factory program mode operations, and the ground line may perform ESD protection and/or may server another function. In some embodiments, the different groups of sawbow lines may be arranged throughout different metal layers. In other embodiments, at least some of the sawbow lines may be on a same metal layer. The first and second groups of sawbow lines may include the pull-up and/or pull-down resistors (as previously discussed) as an additional security feature against hacking.

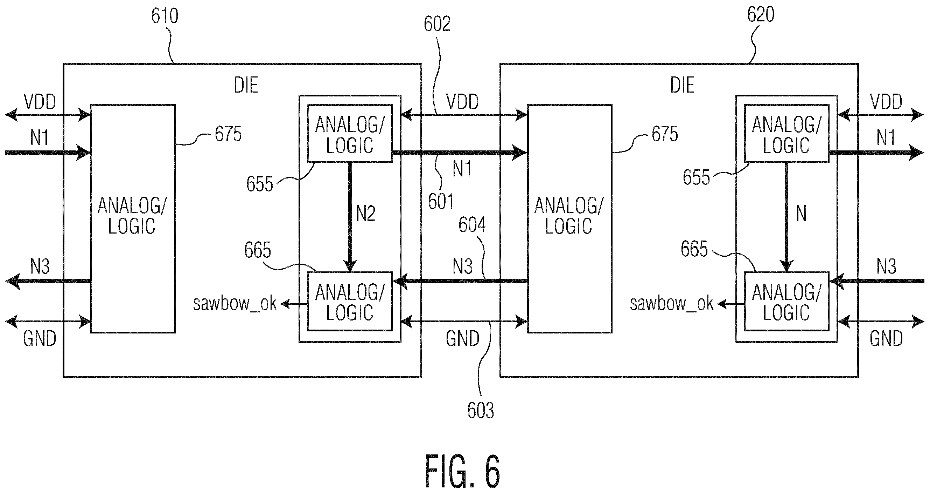

FIG. 6 illustrates an example of the embodiment of FIG. 5, where the first group of sawbow lines includes a sawbow output lines 601 that includes N1 signals, bidirectional power supply line (VDD) 602 (e.g., which may be from left to right or from right to left, or both cases), a ground (or reference potential) lines 603, and a sawbow input line 604. In this embodiment, a first logic circuit 655 in the die 610 outputs N1 signals through the sawbow output line 601 to an adjacent die 620, and a second logic circuit 665 in the die 610 receives the same types of signals from the adjacent die 620. The first and second logic circuits may include one or more analog circuits. There are vastly more analog circuit parameters than digital parameters. That means that sent and/or received signals may be analog and/or digital. In order to gain unauthorized access to the internal data stored on a die, a hacker must first determine the analog circuit parameters. This is extremely difficult, and more or less statistically impossible. Including analog circuits in on the die may therefore substantially increase the level of difficulty of hacking the dies, after being cut and sold as an integrated circuit. When this approach is combined with placement of the sawbow lines on different metal layers, an even more secure die may be formed.

Each of the dies 610 and 620 also includes a third logic circuit (with a corresponding analog circuit) 675 to exchange signals on sawbow lines with another adjacent die on an opposing side of the die. The analog circuits in each of the dies may be replaced with digital circuits (e.g., combinatorial or sequential), or a combination of analog and digital circuits may be included in each die for transmitting and receiving analog and/or digital signals on the sawbow line during a test mode and/or memory/factory program mode.

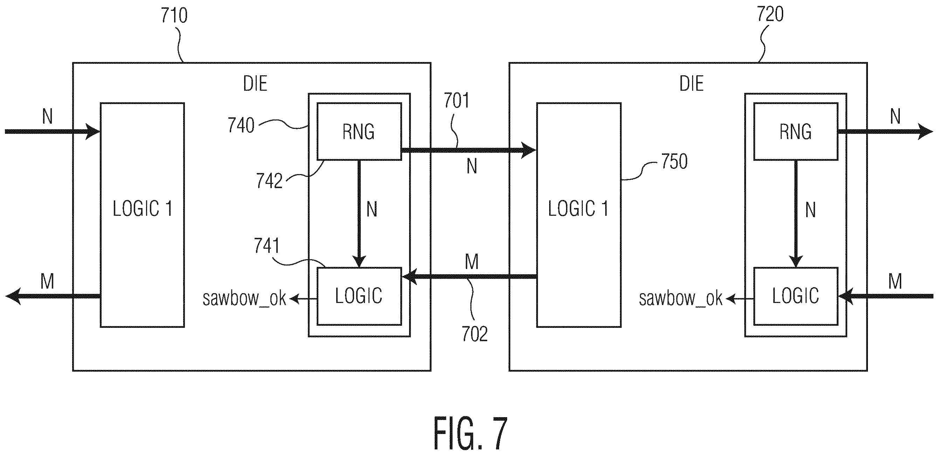

FIG. 7 illustrates another embodiment of sawbow lines for adjacent dies 710 and 720 on an uncut wafer. The sawbow lines include a sawbow output line 701 that includes N signals and a sawbow input line 702 that incudes M signals. Each of the dies also includes a first interface circuit 740 and a second interface circuit 750 that generate/process sawbow signals. The first interface circuit 740 includes logic 741 and a random number generator (RNG) 742. The second interface circuit 750 includes logic that cooperates with the first interface circuit 740 when incorporated into the adjacent die. The logic in the second interface circuit may include, for example, combination or sequential logic that performs a predetermined operation.

In operation, the RNG 742 sends a random signal of N bits from die 720 to die 710 through the sawbow output lines 701. The logic of the second interface circuit 750 performs a combinatorial or sequential logic function on the random signal and sends the result (e.g., M bits) back to die 720 through sawbow input lines 702. In one embodiment, M may be equal to or different from N. The logic 741 in the first circuit 740 of die 720 compares the signal received from the sawbow input line to the random signal originally sent over sawbow output line 701. Based on this comparison, a decision is made as to whether die 720 is properly operating during a test mode and/or memory/factory program mode. The sawbow lines may be arranged on the same or different metal layers as previously described, and/or pull-up and/or pull-down resistors may be used to disable a test mode and/or memory/factory program operation of the dies after a curing process is performed.

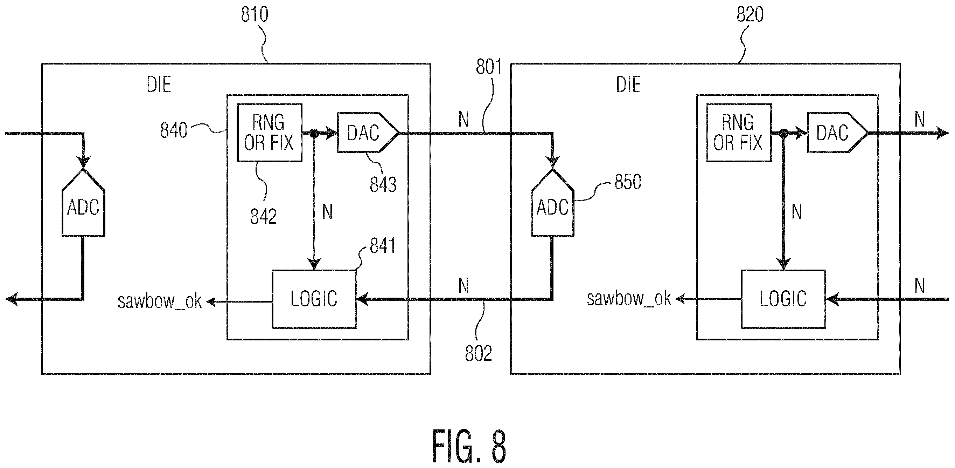

FIG. 8 illustrates another embodiment of sawbow lines for adjacent dies 810 and 820 on an uncut wafer. The sawbow lines include N sawbow output lines 801 and M sawbow input lines 802, where M and N may be the same or different. Each of the dies also includes a first supporting circuit 840 and a second supporting circuit 850. The first supporting circuit 840 includes logic 841, a random number generator (RNG) 842, and a digital-to-analog converter (DAC) 843. The second circuit 850 includes an analog-to-digital converter (ADC).

In operation, the RNG 842 outputs a random signal including N bits to the DAC 843, which converts the random digital signal into an analog signal. The analog signal is sent from die 820 to die 810 through sawbow output line 801. The second circuit 850 in die 810 converts the received analog signal to a digital signal (e.g., N bits in length) for output to die 820 through the sawbow input line 802. The logic 841 in die 820 compares the transmitted random digital signal with the received digital signal. Based on this comparison, a decision is made as to whether die 820 is properly operating during a test mode and/or memory/factory program mode. The sawbow lines may be arranged on the same or different metal layers as previously described, and/or pull-up and/or pull-down resistors may be used to disable test mode and/or memory/factory program mode operation of the dies after a curing process is performed.

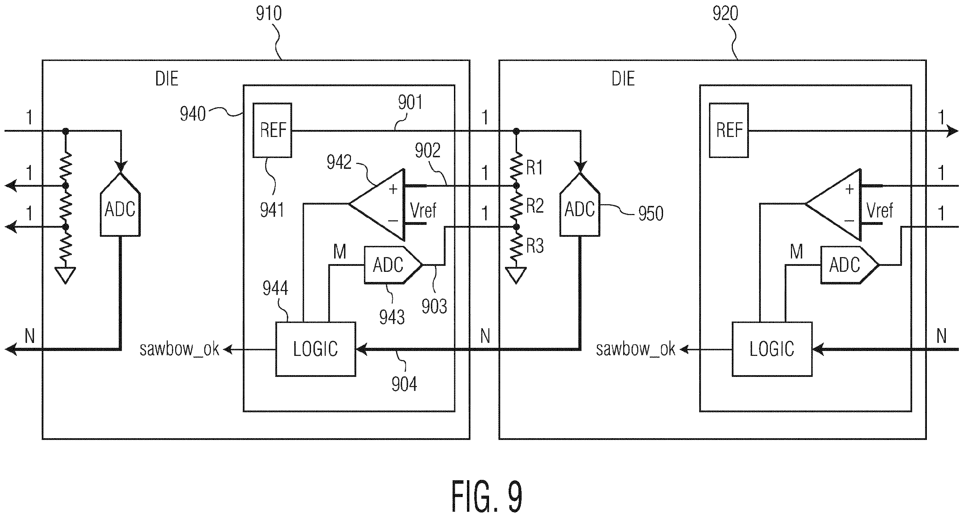

FIG. 9 illustrates another embodiment of sawbow lines for adjacent dies 910 and 920 on an uncut wafer. The sawbow lines include a sawbow output line 901, a first sawbow input line 902, a second sawbow input line 903, and a third sawbow input line 904. Each of the dies also includes a first supporting circuit 940 and a second test circuit 950. The first supporting circuit 940 includes a reference signal generator (REF) 941, a comparator 942, an analog-to-digital converter (ADC) 943, and logic 944. The second supporting circuit 950 includes an ADC.

In operation, the reference signal generator 941 outputs a reference signal from the die 920 to die 910 through the sawbow output line 901. When the die 910 receives the reference signal, two operations are performed. The first operation includes inputting the reference signal through a voltage divider circuit which divides the reference signal based on the values of resistors R1, R2, and R3. The values of the resistors of the voltage divider circuit may be selected to output specific values based on desired results of test data computations. The divided voltage signal output from a node between resistors R1 and R2 is sent to die 920 over the first sawbow input line 902. The comparator 942 in die 920 compares the divided voltage to a reference voltage and outputs the result to logic 944. The divided voltage signal output from a node between resistors R2 and R3 is sent to die 920 over the second sawbow input signal 903, where it is converted into a digital signal by ADC 943.

Second operation includes converting the reference signal to a digital signal using ADC 951. The logic 944 in die 920 generates a signal indicative of whether die 920 is properly operating during a test mode and/or memory/factory program mode based on the signals output from the comparator 942, the ADC 943, and the ADC of circuit 950. The programming of the logic 944 may determine how the processing is performed to render a decision. In one embodiment, the signal received on the third sawbow line may be compared to a threshold value indicative of proper operation of the die 920. The sawbow lines may be arranged on the same or different metal layers and/or pull-up and/or pull-down resistors may be used to disable test mode and/or memory/factory program mode operation of the dies after a curing process is performed.

In one implementation, the embodiment of FIGS. 8 and 9 may be combined to use a mixture of analog and digital signals. In another embodiment, a combination of two or more of the embodiments described herein may be combined with two-, four-, or a different number of sawbow lines, e.g., analog, digital, supply, ground sharing, etc. In one embodiment, part of each of the left or right circuits may be use supply or ground from the other side. This may make hacking much harder.

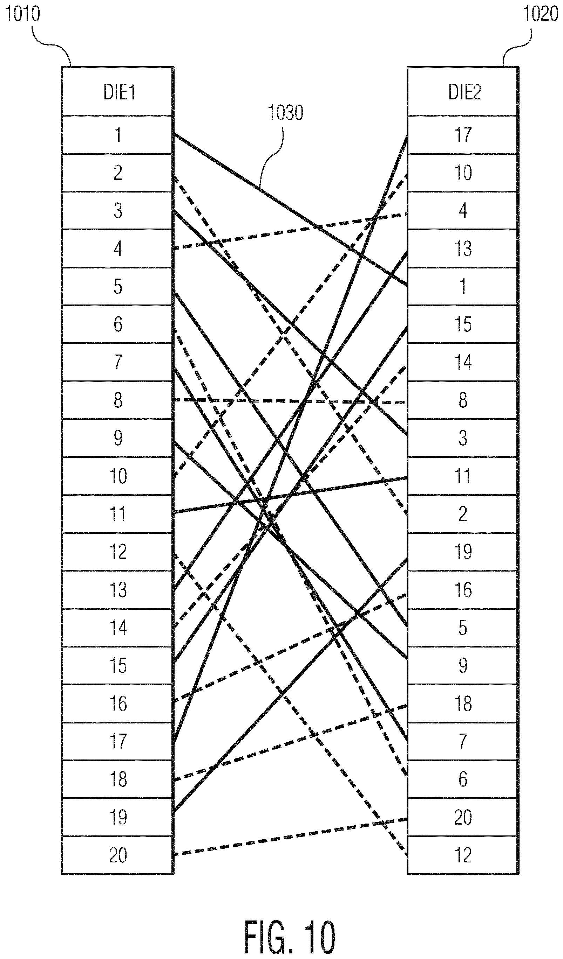

FIG. 10 illustrates an embodiment with twenty sawbow input/output lines 1030 extending between dies 1010 and 1020 to be used for securing test mode and/or memory/factory program mode. The twenty sawbow lines may be assigned in a random or predetermined arrangement. For example, as illustrated in FIG. 10, the inputs/outputs of Die 1 are sequentially ordered but the inputs/outputs of Die 2 are randomly assigned. This random assignment of an increased number of sawbow lines (which input and output signals, for example, in accordance with various analog and/or digital test circuits on the dies, examples of which have been previously discussed) increases protection against hacking.

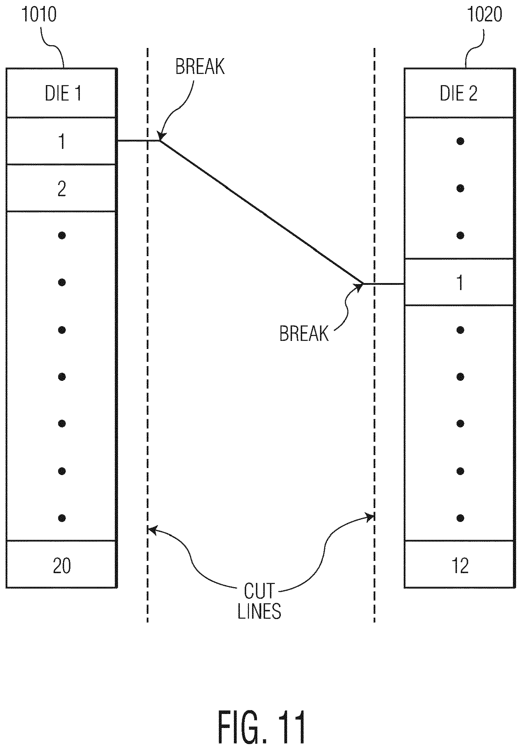

Moreover, the diagonal arrangement of many of these lines may add an extra measure or protection against hacking. For example, the diagonal arrangement of the sawbow lines hides the inputs/outputs illustrated in FIG. 10 in the following manner. In an example illustrated in FIG. 11, the sawbow line between input/output 1 of Die 1 and output/input 1 of Die 2 is diagonal. The same is true of the other sawbow lines. Cutting the sawbow lines may take place before the break 1110 of the sawbow lines. Thus, a hacker cannot determine which connections in Die 2 are to receive the sawbow lines output from Die 1.

The sawbow lines in one or more of the embodiments described herein may be cut in preparation for delivery of the finished product to a customer. To allow retesting and to handle customer returns, the integrated circuit including any of the dies discussed herein may be set to an ERROR mode if its Sawbow line(s) is/are repaired. In this case, it may be possible to get back to an INITIAL mode of operation, but all key material shall be invalidated in this case.

In one embodiment, the sawbow lines may be physical fuses. In this case, a determination may be made as to whether the die/integrated circuit is in the factory or whether it has been distributed to a customer simply by determining whether the sawbow are intact or in a cut state. This may allow the die (or its integrated circuit) to be locked or unlocked. The die may be locked, for example, when storing key or another type of encryption material. Also, in one embodiment, when the sawbow lines are intact, the die may be blanked and returned to a new state. However, once the sawbow lines are cut, the die may no longer be blanked and returned to a new state.

The processors, logic circuits, controllers, and other signal processing or signal generating features of the embodiments disclosed herein may be implemented in logic which, for example, may include hardware, software, or both. When implemented at least partially in hardware, the processors, logic circuits, controllers, and other signal processing or signal generating features may be, for example, any one of a variety of integrated circuits including but not limited to an application-specific integrated circuit, a field-programmable gate array, a combination of logic gates, a system-on-chip, a microprocessor, or another type of processing or control circuit.

When implemented at least partially in software, the processors, logic circuits, controllers, and other signal processing or signal generating features may include, for example, a memory or other storage device for storing code or instructions to be executed, for example, by a computer, processor, microprocessor, controller, or other signal processing device. The computer, processor, microprocessor, controller, or other signal processing device may be those described herein or one in addition to the elements described herein. Because the algorithms that form the basis of the methods (or operations of the computer, processor, microprocessor, controller, or other signal processing device) are described in detail, the code or instructions for implementing the operations of the embodiments may transform the computer, processor, controller, or other signal processing device into a special-purpose processor for performing the methods described herein.

Although the various exemplary embodiments have been described in detail with particular reference to certain exemplary aspects thereof, it should be understood that the invention is capable of other example embodiments and its details are capable of modifications in various obvious respects. As is readily apparent to those skilled in the art, variations and modifications can be affected while remaining within the spirit and scope of the invention. Accordingly, the foregoing disclosure, description, and figures are for illustrative purposes only and do not in any way limit the invention, which is defined only by the claims.

## Claims

1. A chip, comprising:
a circuit;
a plurality of metal layers; and
a portion of a sawbow line coupled to the circuit,
wherein the portion of the sawbow line corresponds to the sawbow line in a cut state, the portion of the sawbow line on a first metal layer of the plurality of metal layers, and wherein the first metal layer is at least partially aligned with and overlapped by a second metal layer of the plurality of metal layers, the second metal layer at least partially hiding the portion of the sawbow line.

2. The chip of claim 1, further comprising:
a resistor coupled to the sawbow line,
wherein the resistor is configured to set a voltage of the sawbow line to a predetermined logical value when the sawbow line is in the cut state.

3. The chip of claim 2, further comprising:
logic coupled to the resistor,
wherein the logic is configured to output a signal to disable a mode of operation of the circuit when the sawbow line is set to the predetermined logical value by the resistor.

4. The chip of claim 3, wherein the mode of operation is a test mode and/or memory/factory program mode of the circuit.

5. The chip of any preceding claim, wherein the sawbow line is configured to carry at least one of a power supply signal, an analog signal, or a digital signal to or from the circuit.

6. A chip as claimed in any preceding claim, further comprising:
a portion of a second sawbow line coupled to the circuit,
wherein the portion of the second sawbow line corresponds to the second sawbow line in a cut state, the portion of the second sawbow line hidden under the first metal layer or a second metal layer of the plurality of metal layers, the first sawbow line and the second sawbow line on different ones of the plurality of metal layers.

7. The chip of claim 6, wherein:
the portion of the first sawbow line is on the second metal layer;
the portion of the second sawbow line is on a third metal layer; and
the first metal layer hides the portions of the first and second sawbow lines.

8. The chip of claim 7, wherein:
the third metal layer is aligned with and under the second metal layer; and
the second metal layer hides the portion of the second sawbow line.

9. The chip of claim 6, 7, or 8 further comprising:
a second resistor coupled to the portion of the second sawbow line,
wherein the first resistor is to set a voltage of the portion of the first sawbow line to a first predetermined value and the second resistor is to set a voltage of the portion of the second sawbow line to a second predetermined value.

10. The chip of claim 9, wherein the first predetermined value is different from the second predetermined value.

11. The chip of claim 9 or 10, wherein:
the first predetermined value is a first logical value; and
the second predetermined value is a second logical value different from the first logical value.

12. The chip of claim 9, 10, or 11 further comprising:
second logic coupled to the second resistor,
wherein at least one of the logic and the second logic is configured to output a signal to disable a mode of operation of the circuit when the portion of the first sawbow line is set to the first predetermined value by the first resistor or when the portion of the second sawbow line is set to the second predetermined value by the second resistor.
